# EUROPEAN PATENT APPLICATION

(11) **EP 4 287 088 A1**
(43) Date of publication of application: **06.12.2023**
(21) Application number: 23176338.4
(22) Date of filing: 31.05.2023
(51) Int. Cl.: G06Q 10/0631, G06Q 10/0637, G06Q 10/1091, G06Q 10/20

(54) **APPARATUS, METHOD, AND PROGRAM FOR MAINTAINING FACILITY**

(30) Priority: 31.05.2022 JP 2022088209
(71) Applicant: Yokogawa Electric Corporation, Musashino-shi, Tokyo 180-8750 (JP)
(72) Inventor: OISHI, Kenji, Musashino-shi, Tokyo, 180-8750 (JP); UEMURA, Hideo, Musashino-shi, Tokyo, 180-8750 (JP); AL-NASER, Mustafa, 31952 Al-Khobar (AE); ALAMOUDI, Abrar Saeed, 31952 Al-Khobar (AE); ALNAJIM, Abdullah, 31952 Al-Khobar (AE)
(74) Representative: Hoffmann Eitle

(57) **Abstract**

Provided is an apparatus including: a report acquisition unit configured to acquire a report of an abnormality having occurred in a facility; a work plan output unit configured to output a work plan for dealing with an abnormality indicated as abnormality information in the report; an evaluation acquisition unit configured to acquire an evaluation of work according to the work plan output from the work plan output unit; and an update unit configured to update output content of the work plan by the work plan output unit by using the evaluation acquired by the evaluation acquisition unit.

## Description

### BACKGROUND

### 1. TECHNICAL FIELD

The present invention relates to an apparatus, a method, and a program for maintaining a facility.

### 2. RELATED ART

Patent Document 1 describes that "when a long-term facility maintenance plan of a plant is proposed to a customer, it is necessary to provide update information and maintenance information at an appropriate update period for each of these instruments. That is, it is necessary to propose a long-term facility maintenance plan appropriately customized for each plant facility owned by the customer" (paragraph 0005) and "the present invention has been made in view of the above problems of a conventional plant maintenance management system, and an object of the present invention is to provide a novel and improved plant facility maintenance plan proposal support system capable of customizing an optimal maintenance execution period for each instrument by reflecting information of a similar plant." (paragraph 0008).

### CITATION LIST

### PATENT DOCUMENT

Patent Document 1: Japanese Patent Application Publication No. 2014-139774

### SUMMARY

In a first aspect of the present invention, provided is an apparatus including: a report acquisition unit configured to acquire a report of an abnormality having occurred in a facility; a work plan output unit configured to output a work plan for dealing with an abnormality indicated as abnormality information in the report; an evaluation acquisition unit configured to acquire an evaluation of work according to the work plan output from the work plan output unit; and an update unit configured to update output content of the work plan by the work plan output unit by using the evaluation acquired by the evaluation acquisition unit.

The apparatus may further include a database connection unit configured to be connected to a database configured to store a plurality of sets each including abnormality information and a work plan for dealing with the abnormality,
The work plan output unit may include: a similarity calculation unit configured to calculate a similarity between the abnormality information in the report and the abnormality information included in each of the plurality of sets; and a selection unit configured to select a candidate of a work plan for dealing with the abnormality indicated in the report on a basis of the similarity calculated by the similarity calculation unit.

In any of the above apparatuses, the selection unit may be configured to preferentially selects, as the candidate of the work plan for dealing with the abnormality indicated in the report, a work plan associated with abnormality information, in which the similarity calculated by the similarity calculation unit is higher, among the abnormality information included in each of the plurality of sets.

In any of the above apparatuses, the selection unit may be configured to select the candidate of the work plan for dealing with the abnormality indicated in the report on a basis of the similarity between the abnormality information in the report and the abnormality information included in each of the plurality of sets, and an evaluation included in each of the plurality of sets.

Any of the above apparatuses may further include a work record acquisition unit configured to acquire abnormality information on an abnormality having occurred in a facility and a work record of dealing with the abnormality. The update unit may be configured to add, as a set of abnormality information and a work plan, the abnormality information and the work record acquired by the work record acquisition unit to the database.

In any of the above apparatuses, each of the plurality of sets may further include an evaluation of a work plan included in each set. The update unit may be configured to update an evaluation stored in the database in association with the candidate of the work plan selected by the selection unit by using the evaluation acquired by the evaluation acquisition unit.

In any of the above apparatuses, the database may be configured to store, for each of the plurality of sets, instrument information for specifying an instrument in which an abnormality has occurred and abnormality information including abnormality content.

In any of the above apparatuses, the similarity calculation unit may be configured to calculate the similarity of the abnormality information on a basis of a similarity of the instrument information and a similarity of a text recorded as the abnormality content between the abnormality information in the report and the abnormality information included in each of the plurality of sets.

In any of the above apparatuses, the database may be configured to store, for each of the plurality of sets, a work plan including a maintenance work and a maintenance preparation work to be performed before the maintenance work.

In a second aspect of the present invention, provided is a method including: acquiring, by a computer, a report of an abnormality having occurred in a facility; outputting, by the computer, a work plan for dealing with an abnormality indicated as abnormality information in the report; acquiring, by the computer, an evaluation of work according to the output work plan; and updating, by the computer, output content of the work plan to be output by using the acquired evaluation.

In a third aspect of the present invention, provided is a program that, when executed by a computer, causes the computer to function as: a report acquisition unit configured to acquire a report of an abnormality having occurred in a facility; a work plan output unit configured to output a work plan for dealing with an abnormality indicated as abnormality information in the report; an evaluation acquisition unit configured to acquire an evaluation of work according to the work plan output from the work plan output unit; and an update unit configured to update output content of the work plan by the work plan output unit by using the evaluation acquired by the evaluation acquisition unit.

The summary clause does not necessarily describe all necessary features of the embodiments of the present invention. In addition, the present invention may also be a sub-combination of the features described above.

### BRIEF DESCRIPTION OF THE DRAWINGS

Fig. 1 illustrates a configuration of an apparatus 100 according to the present embodiment together with a facility 10 or the like.
Fig. 2 illustrates an example of a data structure of a DB 130.
Fig. 3 illustrates an operation flow of the apparatus 100 according to the present embodiment.
Fig. 4 illustrates a display example by the apparatus 100 according to the present embodiment.
Fig. 5 illustrates an example of a computer 2200 in which a plurality of aspects of the present invention may be embodied in whole or in part.

### DESCRIPTION OF EXEMPLARY EMBODIMENTS

Hereinafter, the present invention will be described through embodiments of the invention, but the following embodiments do not limit the claimed invention. In addition, some combinations of features described in the embodiments may not be essential for the solving means of the invention.

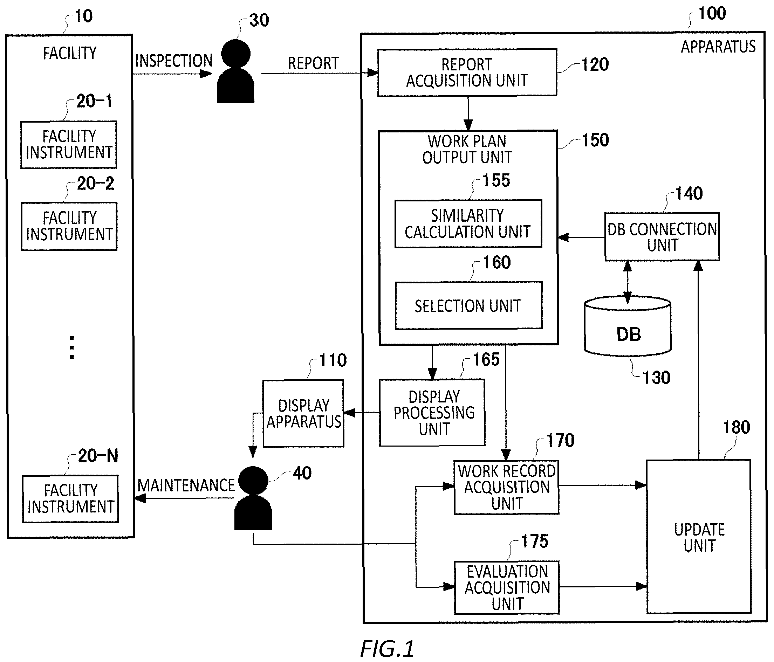

Fig. 1 illustrates a configuration of an apparatus 100 according to the present embodiment together with a facility 10 or the like. The facility 10 is provided in a plant or the like. Such a plant may be, for example, an industrial plant such as a chemical or metal plant; a plant for managing and controlling a well site such as a gas field and an oil field and its surroundings; a plant for managing and controlling electrical power generation such as hydraulic, thermal, and nuclear power generation; a plant for managing and controlling energy harvesting such as solar photovoltaic and wind power generation; a plant for managing and controlling water supply and sewerage, a dam, or the like, etc. In addition, the facility 10 may be provided in a building, various industrial plants, means of transportation, or the like. Such an facility 10 may have one or more process apparatuses, one or more power generation apparatuses, and one or more other facility instruments 20-1 to N (also referred to as "facility instrument(s) 20") which are one or more other apparatuses.

Each of one or more facility instruments 20 may have a field instrument. The field instruments may be, for example, a pressure meter, a flowmeter, a sensor instrument such as a temperature sensor, a valve instrument such as a flow control valve and an on-off valve, an actuator instrument such as a fan and a motor, an imaging instrument such as a camera or a video for imaging a situation of a plant or the like and an object such as a facility, an acoustic instrument such as a microphone or a speaker for collecting an abnormal noise from a plant, a facility, or the like or emitting a warning sound or the like, a position detection instrument for outputting positional information of an apparatus provided in the facility 10, or another instrument. Each of one or more facility instruments 20 may be provided with one or more sensors functioning as a sensor instrument, an imaging instrument, an acoustic instrument, or the like for monitoring the states of themselves.

One or more inspectors 30 inspect each facility instrument 20 in the facility 10. When an abnormality has occurred in the facility 10, the inspector 30 provides the apparatus 100 with a report of the abnormality having occurred in the facility 10.

In response to acquiring the report of the abnormality, the apparatus 100 outputs a work plan for dealing with the abnormality. The apparatus 100 may be realized by a computer such as a personal computer (PC), a tablet computer, a smartphone, a workstation, a server computer, or a general-purpose computer, or may be realized by a computer system in which a plurality of computers is connected. Such a computer system is also a computer in a broad sense. The apparatus 100 may be a dedicated computer designed for monitoring the facility 10 or may be dedicated hardware realized by a dedicated circuit.

A display apparatus 110 is connected to the apparatus 100 in a wired or wireless manner. The display apparatus 110 displays the work plan output by the apparatus 100. The display apparatus 110 may be a computer, such as a personal computer (PC), used by a worker 40. Alternatively, the display apparatus 110 may be a computer such as a tablet computer or a smartphone that can be carried by the worker 40.

One or more workers 40 prepare for maintenance work of the facility 10 (maintenance preparation work) and maintain the facility 10 (maintenance work) according to the work plan displayed on the display apparatus 110. As a result, the worker 40 solves the abnormality reported by the inspector 30.

The apparatus 100 according to the present embodiment includes a report acquisition unit 120, a database 130 (DB 130), a DB connection unit 140, a work plan output unit 150, a display processing unit 165, a work record acquisition unit 170, an evaluation acquisition unit 175, and an update unit 180. The report acquisition unit 120 acquires a report of an abnormality occurring in the facility 10. The report acquisition unit 120 according to the present embodiment receives a report input to a computer such as a PC, a tablet computer, or a smartphone used by the inspector 30 via wired or wireless communication. The report acquisition unit 120 may receive, as the report of the abnormality, a notification of an abnormality detected by a sensor provided in one or more facility instruments 20 from a monitoring apparatus or the like that monitors the facility 10.

The DB 130 is an external storage apparatus, such as a semiconductor memory or a hard disk, of the apparatus 100. Alternatively, the DB 130 may be a cloud storage, a network attached storage (NAS), or the like provided outside the apparatus 100 and connected to the apparatus 100 via a wired or wireless network. The DB 130 stores, for each of a plurality of types of abnormalities, a work plan for dealing with the abnormality. Specifically, the DB 130 stores a plurality of sets each including abnormality information regarding an abnormality and a work plan for dealing with the abnormality. In the present embodiment, the DB 130 stores, as a set of the abnormality information and the work plan, a set of abnormality information regarding an abnormality having occurred in the past and a work record of dealing with the abnormality. For various abnormalities defined in advance as abnormalities that may occur in the facility 10, the DB 130 may store, as the set of the abnormality information and the work plan, a set of abnormality information and a work plan scheduled for an event where the abnormality occurs. In addition, in the present embodiment, in each of the plurality of sets, the DB 130 further stores evaluation of the work plan included in each set.

The DB connection unit 140 is connected to the DB 130. The DB connection unit 140 accesses the DB 130 in response to a request from each component in the apparatus 100.

The work plan output unit 150 is connected to the report acquisition unit 120 and the DB connection unit 140. The work plan output unit 150 outputs a work plan for dealing with the abnormality indicated as the abnormality information in the report acquired by the report acquisition unit 120. In the present embodiment, the work plan output unit 150 searches the work plan for each abnormality stored in the DB 130 for a work plan for an abnormality similar to the abnormality indicated in the report and outputs the work plan. Herein, together with the work plan, the work plan output unit 150 may output the evaluation stored in the DB 130 in association with the work plan. Note that the evaluation stored in the DB 130 in association with the work plan is also referred to as "current evaluation" of the work plan.

The work plan output unit 150 includes a similarity calculation unit 155 and a selection unit 160. The similarity calculation unit 155 accesses the DB 130 via the DB connection unit 140, and calculates a similarity between the abnormality information in the report acquired by the report acquisition unit 120 and the abnormality information included in each of the plurality of sets stored in the DB 130. The selection unit 160 selects a candidate of the work plan for dealing with the abnormality indicated in the report on the basis of the similarity calculated by the similarity calculation unit 155. Herein, the selection unit 160 may preferentially select, as the candidate of the work plan for dealing with the abnormality indicated in the report, a work plan associated with abnormality information having a higher similarity calculated by the similarity calculation unit 155 among the abnormality information included in each of the plurality of sets stored in the DB 130. As a result, the selection unit 160 can select, as a candidate of a current work plan, a work plan for dealing with an abnormality similar to a current abnormality.

The display processing unit 165 is connected to the work plan output unit 150. The display processing unit 165 performs display processing of causing the display apparatus 110 to display one or more candidates of the work plan output by the work plan output unit 150. The display processing unit 165 may generate a display screen to be displayed on the display apparatus 110 and transmit the display screen to the display apparatus 110, or may generate display data of a web page and make the display data accessible from the display apparatus 110. As a result, the display processing unit 165 can propose the candidates of the work plan to the worker 40, and the worker 40 can decide the work plan for dealing with the current abnormality from the candidates of the work plan. Alternatively, the worker 40 may decide the work plan for dealing with the current abnormality by adding or changing a part of the work with reference to the candidates of the work plan displayed on the display apparatus 110. When the display processing unit 165 includes the current evaluation of the candidate of the work plan in the display screen, the worker 40 may decide the work plan for dealing with the current abnormality in consideration of the current evaluation of the candidate for the work plan.

The work record acquisition unit 170 is connected to the work plan output unit 150. The work record acquisition unit 170 acquires the abnormality information regarding the abnormality occurring in the facility 10 from the report acquisition unit 120 via the work plan output unit 150. In addition, the work record acquisition unit 170 acquires, from the worker 40, a work record of dealing with the abnormality occurring in the facility 10. The evaluation acquisition unit 175 acquires the evaluation of the work according to the work plan output from the work plan output unit 150. Note that the evaluation newly acquired by the evaluation acquisition unit 175 for the work actually performed according to the work plan output from the work plan output unit 150 is also referred to as "new evaluation".

The update unit 180 is connected to the work record acquisition unit 170 and the evaluation acquisition unit 175. The update unit 180 updates the output content of the work plan by the work plan output unit 150 by using the evaluation (new evaluation) acquired by the evaluation acquisition unit 175. In the present embodiment, the update unit 180 updates the evaluation (current evaluation) stored in the DB 130 in association with the candidate of the work plan selected by the selection unit 160 by using the new evaluation acquired by the evaluation acquisition unit 175. In addition, the update unit 180 may add, as the set of the abnormality information and the work plan, the abnormality information and the work record acquired by the work record acquisition unit 170 to the DB 130 in response to acquisition of the work record at least partially different from the candidate of the work plan.

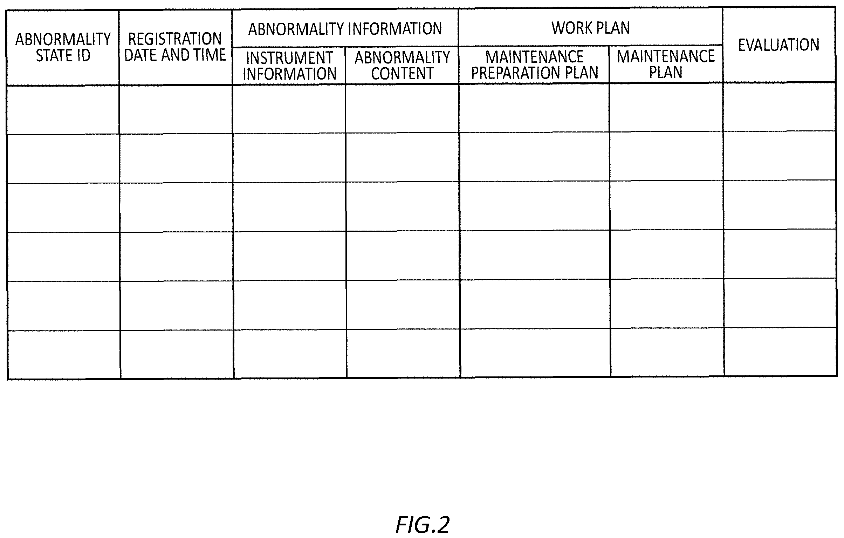

Fig. 2 illustrates an example of a data structure of the DB 130. The DB 130 according to the present embodiment includes information regarding an abnormality state ID, registration date and time, abnormality information, a work plan, and evaluation for each of a plurality of sets (records).

The abnormality state ID is abnormality identification information for identifying an abnormality indicated by the abnormality information in the record. The report acquisition unit 120 assigns the abnormality state ID to the reported abnormality each time the report of the abnormality occurring in the facility 10 is received. The update unit 180 adds, to the DB 130, the abnormality state ID assigned to the abnormality indicated by the abnormality information in association with the abnormality information and the work record. The registration date and time indicates the date and time when the record is registered in the DB 130.

The abnormality information indicates details of the abnormality indicated in the report. The abnormality information includes instrument information for specifying the facility instrument 20 in which the abnormality has occurred and abnormality content. The instrument information includes information regarding each of one or more items, which are related to the facility instrument 20 in which an abnormality has occurred, such as at least one of a product name, product identification information, a type (for example, a pump, a reactor, and a power supply), a specification, an installation place, or an installation state.

The abnormality content indicates the content of the abnormality occurring in the facility instrument 20 indicated in the instrument information. The abnormality content may include information (for example, check by the inspector 30) indicating the presence or absence of occurrence for each abnormality item such as at least one of liquid leakage, abnormal vibration, abnormal noise, or ignition. In addition, the abnormality content may include, for example, information for specifying a type of abnormality or a specialized department or a specialized team to cope with the abnormality. In addition, the abnormality content may include information indicating a priority of treatment for the abnormality. In addition, the abnormality content may include a detailed description of the abnormality by text input by the inspector 30.

The work plan indicates information related to a work plan for dealing with the abnormality indicated by the abnormality information. The DB 130 may store a work plan including a maintenance work and a maintenance preparation work to be performed before the maintenance work for each of the plurality of sets.

The information regarding a maintenance preparation plan may include information indicating necessity of each preparation item, such as at least one of necessity of various tools, necessity of mounting of safety equipment, necessity of assembly of scaffolding, or necessity of notification. In addition, the maintenance preparation work information may include numerical information, such as at least one of the number of workers, the work time, or the cost required for the maintenance preparation work, regarding the maintenance preparation work.

The information regarding the maintenance plan may include, for example, information indicating necessity of each work item such as necessity of various maintenance work processes (stop, repair, replacement, cleaning, adjustment, or the like of a line). In addition, the maintenance work information may include numerical information, such as at least one of the number of workers, the required skill of the worker, the work time, or the cost required for the maintenance work, regarding the maintenance work.

The information regarding the evaluation (current evaluation) is an index indicating to what extent the work (the maintenance preparation work, the maintenance work) according to the work plan in the record is suitable for dealing with the reported abnormality (or whether the work is related to dealing with the abnormality). In the present embodiment, the information regarding the current evaluation is represented by a score value in which the score increases as the work according to the work plan is suitable (or as the degree of relevance with dealing with the abnormality increases). Alternatively, the information regarding the current evaluation may be represented by a set of score values (also referred to as "item evaluation") for each of the plurality of evaluation items (also referred to as KPI: Key Performance Indicator). Such a KPI may include, for example, the presence or absence of a shortage of processes, the presence or absence of rework, the magnitude of a difference between the planned number of workers and the actual number of workers, the magnitude of a difference between the planned work time and the actual work time, the magnitude of a difference between the planned cost and the actual cost, and the like.

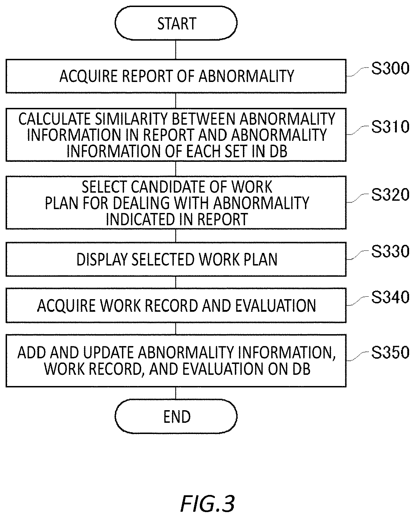

Fig. 3 illustrates an operation flow of the apparatus 100 according to the present embodiment. The apparatus 100 executes an operation flow in this drawing each time a report of an abnormality is received. In S300 (step 300), the report acquisition unit 120 acquires a report of an abnormality occurring in the facility 10.

In S310, the similarity calculation unit 155 calculates a similarity between the abnormality information in the report acquired by the report acquisition unit 120 and the abnormality information included in each of the plurality of sets stored in the DB 130. In the present embodiment, when the value of each item of the abnormality information (instrument information and abnormality content) in the report matches (or is included in) the value of the corresponding item in the abnormality information to be compared, the similarity calculation unit 155 assigns a higher similarity score than that in a case where the values do not match. Then, the similarity calculation unit 155 performs the calculation or the like of the sum of the similarity scores for the respective items to integrate the scores and set the result as the similarity.

When the abnormality information includes abnormality content described in text, the similarity calculation unit 155 may calculate the similarity of the abnormality information on the basis of the similarity of the instrument information and the similarity of the text recorded as the abnormality content between the abnormality information in the report and the abnormality information included in each of the plurality of sets. For example, for an item input as a text such as detailed description of abnormality, the similarity calculation unit 155 may convert the text into a feature vector by using whether each of a plurality of words (for example, a predetermined registered word) appears in the text, the appearance frequency of each of the plurality of words, or the like, and calculate a similarity between the feature vectors (for example, an inner product between unit vectors). Herein, the similarity calculation unit 155 may calculate a similarity between the text included in the abnormality information in the report and the text included in the abnormality information to be compared by using the feature vector including TF-IDF for each of the plurality of words. The similarity calculation unit 155 may calculate a similarity between the abnormality information in the report and the abnormality information stored in the DB 130 by integrating the similarity of the portion other than the text in the abnormality information and the similarity of the text portion by adding, summing the squares, or the like.

In S320, the selection unit 160 selects candidates of the work plan for dealing with the abnormality indicated in the report on the basis of the similarity calculated by the similarity calculation unit 155. The selection unit 160 according to the present embodiment preferentially selects a work plan associated with abnormality information having a higher similarity to the abnormality information in the report. The selection unit 160 may set, as the candidates of the work plan, k work plans associated with predetermined k (k is an integer of 1 or 2 or more) pieces of abnormality information selected in descending order of similarity calculated by the similarity calculation unit 155 from each set stored in the DB 130 (k-nearest neighbor algorithm).

Herein, "preferentially selects" means that when other conditions are the same, a necessary number of work plans are selected in descending order of priority, but when other conditions are different, a work plan with a higher priority may not be selected and a work plan with a lower priority may be selected. For example, when a probability is adopted in the selection of the work plan, the selection unit 160 may select the candidate of the work plan with a higher probability as the similarity calculated by the similarity calculation unit 155 is higher.

The selection unit 160 may select the candidates of the work plan for dealing with the abnormality indicated in the report on the basis of the similarity between the abnormality information in the report and the abnormality information included in each of the plurality of sets and the evaluation (current evaluation) included in each of the plurality of sets. For example, for each of the plurality of sets stored in the DB 130, the selection unit 160 may select, as the candidates of the work plan, k sets of work plans selected in descending order of the value integrated by taking the sums or weighted sums of the similarity of the abnormality information and the current evaluation. In addition, from a set, in which the current evaluation exceeds a predetermined threshold, among the plurality of sets, the selection unit 160 may select the candidates of the work plan on the basis of the similarity of the abnormality information.

In S330, the display processing unit 165 performs display processing of causing the display apparatus 110 to display one or more candidates of the work plan generated in S310 and S320. In S340, the work record acquisition unit 170 acquires a work record of work performed by the worker 40 with reference to the candidates of work plan displayed on the display apparatus 110. The evaluation acquisition unit 175 acquires the evaluation (new evaluation) of the work according to the work plan (the candidates of the work plan) displayed on the display apparatus 110. The new evaluation may include an evaluation value (item evaluation value) for each of one or more evaluation items (KPI). Alternatively, this new evaluation may be represented by one score value.

In S350, the update unit 180 updates the output content of the work plan by the work plan output unit 150 by using the new evaluation acquired by the evaluation acquisition unit 175. The update unit 180 updates the current evaluation stored in the DB 130 in association with the candidate of the work plan selected by the selection unit 160 by using the new evaluation acquired by the evaluation acquisition unit 175. As a result, when outputting the same work plan later, the work plan output unit 150 can output the updated current evaluation associated with this work plan.

In addition, the update unit 180 may add, as the set of the abnormality information and the work plan, the abnormality information and the work record acquired by the work record acquisition unit 170 to the DB 130. The update unit 180 may add the set of the abnormality information and the work record to the DB 130 on condition that the abnormality information and the work record acquired by the work record acquisition unit 170 are at least partially different from the abnormality information and the work plan of the set selected by the selection unit 160.

According to the apparatus 100 described above, in response to the report of the abnormality of the facility 10, it is possible to propose maintenance work or the like for dealing with the abnormality. Herein, by using the history of the work record stored in the DB 130, the work plan output unit 150 can propose a candidate of the work plan for an abnormality that has occurred suddenly by using the work record of dealing with a similar abnormality in the past. As a result, the apparatus 100 can quickly recover the facility 10 from the abnormality by using the past work record, and can enhance the productivity or availability of the facility 10.

In addition, according to the apparatus 100, by accumulating, in the DB 130, work records of dealing with abnormalities, it is possible to advance learning such that a work plan for dealing with a new type of abnormality can be output. In addition, according to the apparatus 100, the accuracy of the output work plan can be improved by acquiring the new evaluation by the worker 40 and updating the current evaluation of the work plan accumulated in the DB 130.

The apparatus 100 may be used as a maintenance management/maintenance activity proposal system integrated with a computerized maintenance management system (CMMS). The CMMS may have functions of the work record acquisition unit 170 and the evaluation acquisition unit 175. In this case, the CMMS acquires the work record of dealing with the abnormality, and extracts, from the work record, item evaluation for one or more evaluation items such as a difference in work time or cost budget or accumulated overtime hours. The update unit 180 in the apparatus 100 receives the work record input to the CMMS from the CMMS, and stores the work record in the DB 130 in association with the abnormality information. In addition, the update unit 180 calculates a new evaluation for the work content of the work record by using each item evaluation extracted by the CMMS, and updates the current evaluation of the work record stored in the DB 130. As a result, the apparatus 100 can perform maintenance management in cooperation with the CMMS and propose a work plan for dealing with a newly occurring abnormality.

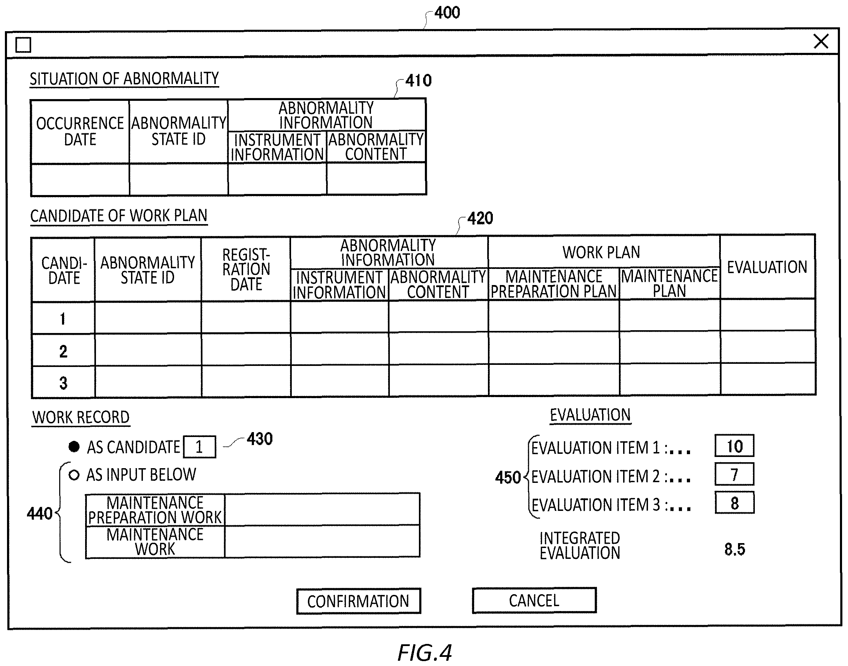

Fig. 4 illustrates a display example by the apparatus 100 according to the present embodiment. The display processing unit 165 in the apparatus 100 may perform display processing of displaying the display screen 400 on the entire screen, a window, or the like of the display apparatus 110 in response to the reported abnormality. The display screen 400 includes an abnormality display field 410, a candidate display field 420, a work record field including a candidate selection field 430 and a work record input field 440, and an evaluation field including an evaluation input field 450.

In S330 of Fig. 3, the display processing unit 165 displays the abnormality included in the report acquired by the report acquisition unit 120 in the abnormality display field 410. The abnormality display field 410 includes display of an occurrence date of an abnormality, an abnormality state ID, and abnormality information (instrument information and abnormality content).

In S330 of Fig. 3, the display processing unit 165 displays each of one or more candidates of the work plan output by the work plan output unit 150 in the candidate display field 420. The candidate display field 420 includes display of a candidate number, an abnormality state ID, a registration date, abnormality information (instrument information and abnormality content), a work plan (a maintenance preparation plan and a maintenance plan), and evaluation (current evaluation) for each set selected by the selection unit 160 among the plurality of sets stored in the DB 130.

In step S330 in Fig. 3, the display processing unit 165 displays, as the work record field, an input field for inputting the work record of the maintenance preparation work and the maintenance work performed to deal with the abnormality in addition to the candidate display field 420. In S340 of Fig. 3, the work record acquisition unit 170 inputs a work record by using the work record field. The candidate selection field 430 is selected by the worker 40 when the same work as any of the candidates of the work plan displayed in the candidate display field 420 is performed. The candidate selection field 430 includes an input field for designating, by a candidate number or the like, a candidate used for the actual work among the work plan candidates displayed in the candidate display field 420. When the candidate selection field 430 is selected, the work record acquisition unit 170 determines that work having the same content as the candidate designated by the candidate number or the like has been performed to deal with the reported abnormality.

When work at least partially different from the candidate is performed while referring to the candidate of the work plan displayed sin the candidate display field 420, the work record input field 440 is selected by the worker 40. When the work record input field 440 is selected and information regarding the maintenance preparation work and the maintenance work that have been actually performed is input, the work record acquisition unit 170 determines that the input work has been performed to deal with the reported abnormality.

In S330 of Fig. 3, the display processing unit 165 displays, as an evaluation field, an input field for inputting evaluation (new evaluation) of the work record in addition to the candidate display field 420. In S350 of Fig. 3, the evaluation acquisition unit 175 inputs the new evaluation by using the evaluation field. The evaluation field includes an evaluation input field 450 for inputting a score for each of a plurality of evaluation items (KPI). In S340 of Fig. 3, the evaluation acquisition unit 175 acquires the score (item evaluation) of each evaluation item input in the evaluation input field 450. For an item represented by a numerical value such as a work hours, an overtime hours, and a cost, the evaluation acquisition unit 175 may input the numerical value of the item instead of the score. In this case, the update unit 180 may perform processing of converting this numerical value into a score. For example, for the work time, the update unit 180 calculates a lower score as a difference between the actual work time and the scheduled work time in the work plan increases.

In S350 of Fig. 3, the update unit 180 may calculate a new evaluation (integrated evaluation) of the work record by taking an average, a weighted average, or the like using the score of each evaluation item. The update unit 180 updates the current evaluation stored in the DB 130 in association with the candidate for the work plan selected by the selection unit 160 by using the new evaluation (integrated evaluation) calculated according to the evaluation acquired by the evaluation acquisition unit 175. As an example, the update unit 180 updates the current evaluation stored in the DB 130 by using a following method.
(1) Update the current evaluation of the candidate used for the actual work.

In response to the candidate of the work plan used for the actual work being designated in the candidate selection field 430, the update unit 180 updates the current evaluation in the DB 130 corresponding to the designated work plan. Herein, the DB 130 may store, as the current evaluation of each work plan, an average or a moving average of one or more evaluations (new evaluations) received so far for the work plan, and the update unit 180 may update the average or the moving average of the new evaluations so far in the DB 130 to an average or a moving average obtained by reflecting the current new evaluation. In order to realize this, the DB 130 may store the number of new evaluations received so far or the like necessary for calculation of the average in association with each work plan. In addition, the DB 130 may store, for example, a predetermined number of latest new evaluations required for calculation of the moving average in association with each work plan. Herein, the update unit 180 may calculate the current evaluation after the update by using a weighted average or a weighted moving average obtained by weighting a newer evaluation higher.

In addition, in order to reduce the amount of data stored in the DB 130, a weighted sum of the current evaluation stored in the DB 130 and the current new evaluation may be calculated, and the current evaluation may be updated to the weighted sum. When the current evaluation is set as E and the new evaluation is set as e, as an example, a weighted sum E' can be expressed by E' = (1 - α)E + αe (where 0 < α < 1). By using such smoothing, the update unit 180 can calculate an approximate value of the average or moving average of the latest new evaluations even when the number of evaluations (new evaluations) so far or the like are not stored in the DB 130.

(2) Update the evaluation of each of two or more candidates.

The update unit 180 may update the current evaluation, in the DB 130, corresponding to each of two or more or all candidates of a plurality of candidates of the work plan output by the work plan output unit 150. The update unit 180 may update the current evaluation of each candidate in a manner similar to (1).

The update unit 180 may reflect, with a higher weight, the new evaluation on a work plan candidate closer to the work plan used for the actual work. For example, the update unit 180 may calculate a similarity between the work record input in the work record input field 440 and the work plan of each candidate, and increase the coefficient α in the weighted sum E' = (1 - α)E + αe illustrated in (1) as the similarity is higher.

According to the update unit 180 described above, the current evaluation stored in the DB 130 in association with the work plan candidate output by the work plan output unit 150 is repeatedly updated by using the current evaluation (new evaluation), whereby the accuracy of the evaluation (current evaluation) can be improved. As a result, the apparatus 100 can select a more suitable work plan for the abnormality, and can quickly recover the facility 10 from the abnormality.

In the example of this drawing, the display processing unit 165 generates a display screen that displays, in the same window, the work record field including the abnormality display field 410, the candidate display field 420, the candidate selection field 430, and the work record input field 440, and the evaluation field including the evaluation input field 450. Alternatively, the display processing unit 165 may display these fields in different windows.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer-readable medium may include any tangible device that can store instructions to be executed by a suitable device, and as a result, the computer-readable medium having instructions stored thereon includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

The computer readable instructions may be provided for a processor or programmable circuitry of a general purpose computer, special purpose computer, or other programmable data processing apparatuses such as a computer locally or via a wide area network (WAN) such as a local area network (LAN), the Internet, or the like, and execute the computer readable instructions to create means for executing the operations designated in flowcharts or block diagrams. An example of the processor includes a computer processor, processing unit, microprocessor, digital signal processor, controller, microcontroller, etc.

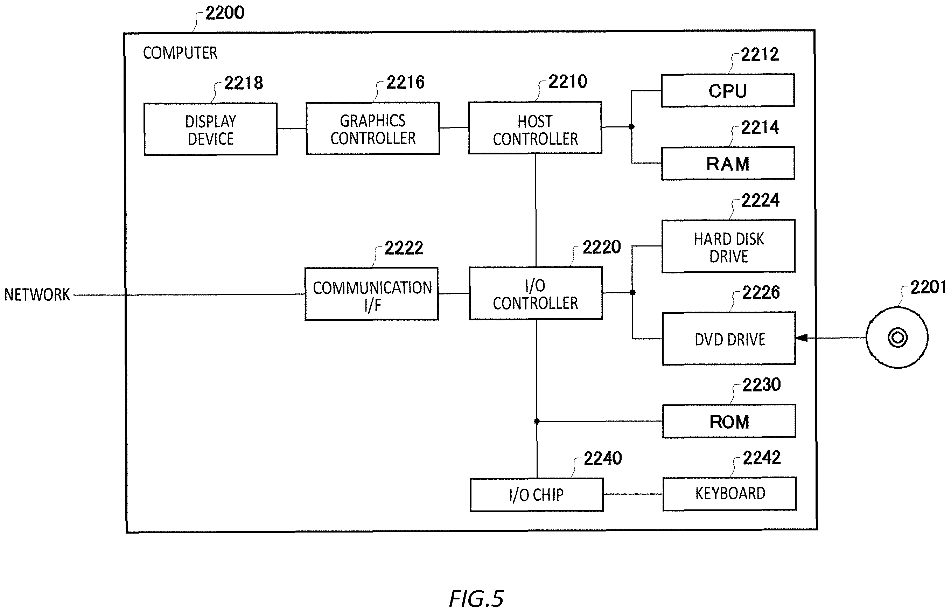

Fig. 5 illustrates an example of a computer 2200 in which a plurality of aspects of the present invention may be embodied in whole or in part. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, and the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing described in these programs is read by the computer 2200 and provides cooperation between the programs and various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing on the basis of processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

While the present invention has been described with the embodiments, the technical scope of the present invention is not limited to the scope of the above described embodiments. It is apparent to persons skilled in the art that varied alteration or improvement can be added to the above embodiments. It is apparent from description of the claims that a form added with such alteration or improvement may also be included in the technical scope of the present invention.

It should be noted that each processing such as the operations, procedures, steps, and stages in the apparatus, system, program, and method shown in the claims, the specification, or the drawings may be realized in any order, unless its execution order is specified as "before", "prior to", or the like and unless output from previous processing is used in subsequent processing. Even if description is made, regarding an operation flow in the claims, the specification or the drawings, by using "first", "next", or the like as a matter of convenience, it does not necessarily mean that the processing must be performed in this order.

### EXPLANATION OF REFERENCES

10: facility,
20: facility instrument;
30: inspector;
40: worker;
100: apparatus;
110: display apparatus;
120: report acquisition unit;
130: DB;
140: DB connection unit;
150: work plan output unit;
155: similarity calculation unit;
160: selection unit;
165: display processing unit;
170: work record acquisition unit;
175: evaluation acquisition unit;
180: update unit;
400: display screen;
410: abnormality display field;
420: candidate display field;
430: candidate selection field;
440: work record input field;
450: evaluation input field;
2200: computer;
2201: DVD-ROM;
2210: host controller;
2212: CPU;
2214: RAM;
2216: graphic controller;
2218: display device;
2220: input/output controller;
2222: communication interface;
2224: hard disk drive;
2226: DVD-ROM drive;
2230: ROM;
2240: input/output chip; and
2242: keyboard.

## Claims

1. An apparatus comprising:
a report acquisition unit configured to acquire a report of an abnormality having occurred in a facility;
a work plan output unit configured to output a work plan for dealing with an abnormality indicated as abnormality information in the report;
an evaluation acquisition unit configured to acquire an evaluation of work according to the work plan output from the work plan output unit; and
an update unit configured to update output content of the work plan by the work plan output unit by using the evaluation acquired by the evaluation acquisition unit.

2. The apparatus according to claim 1, further comprising:
a database connection unit configured to be connected to a database configured to store a plurality of sets each including abnormality information and a work plan for dealing with the abnormality, wherein
the work plan output unit includes:
a similarity calculation unit configured to calculate a similarity between the abnormality information in the report and the abnormality information included in each of the plurality of sets; and
a selection unit configured to select a candidate of a work plan for dealing with the abnormality indicated in the report on a basis of the similarity calculated by the similarity calculation unit.

3. The apparatus according to claim 2, wherein the selection unit is configured to preferentially selects, as the candidate of the work plan for dealing with the abnormality indicated in the report, a work plan associated with abnormality information, in which the similarity calculated by the similarity calculation unit is higher, among the abnormality information included in each of the plurality of sets.

4. The apparatus according to claim 2 or 3, wherein the selection unit is configured to select the candidate of the work plan for dealing with the abnormality indicated in the report on a basis of the similarity between the abnormality information in the report and the abnormality information included in each of the plurality of sets, and an evaluation included in each of the plurality of sets.

5. The apparatus according to any one of claims 2 to 4, further comprising:
a work record acquisition unit configured to acquire abnormality information on an abnormality having occurred in a facility and a work record of dealing with the abnormality, wherein
the update unit is configured to add, as a set of abnormality information and a work plan, the abnormality information and the work record acquired by the work record acquisition unit to the database.

6. The apparatus according to any one of claims 2 to 5, wherein
each of the plurality of sets includes an evaluation of a work plan included in each set, and
the update unit is configured to update an evaluation stored in the database in association with the candidate of the work plan selected by the selection unit by using the evaluation acquired by the evaluation acquisition unit.

7. The apparatus according to any one of claims 2 to 6, wherein the database is configured to store, for each of the plurality of sets, instrument information for specifying an instrument in which an abnormality has occurred and abnormality information including abnormality content.

8. The apparatus according to claim 7, wherein the similarity calculation unit is configured to calculate the similarity of the abnormality information on a basis of a similarity of the instrument information and a similarity of a text recorded as the abnormality content between the abnormality information in the report and the abnormality information included in each of the plurality of sets.

9. The apparatus according to any one of claims 2 to 8, wherein the database is configured to store, for each of the plurality of sets, a work plan including a maintenance work and a maintenance preparation work to be performed before the maintenance work.

10. A method comprising:
acquiring, by a computer, a report of an abnormality having occurred in a facility;
outputting, by the computer, a work plan for dealing with an abnormality indicated as abnormality information in the report;
acquiring, by the computer, an evaluation of work according to the output work plan; and
updating, by the computer, output content of the work plan to be output by using the acquired evaluation.

11. A program performed by a computer, wherein the program causes the computer to function as:
a report acquisition unit configured to acquire a report of an abnormality having occurred in a facility;
a work plan output unit configured to output a work plan for dealing with an abnormality indicated as abnormality information in the report;
an evaluation acquisition unit configured to acquire an evaluation of work according to the work plan output from the work plan output unit; and
an update unit configured to update output content of the work plan by the work plan output unit by using the evaluation acquired by the evaluation acquisition unit.
